(19) Europäisches Patentamt
European Patent Office
Office européen des brevets

(11) EP 2 360 232 A1

# (12) EUROPEAN PATENT APPLICATION

(43) Date of publication:
**24.08.2011 Bulletin 2011/34**

(21) Application number: **10153406.3**

(22) Date of filing: **12.02.2010**

(51) Int Cl.:
***C11D 1/83*** (2006.01) ***C11D 3/40*** (2006.01)
***C11D 10/04*** (2006.01) *C11D 1/14* (2006.01)
*C11D 1/22* (2006.01) *C11D 1/72* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Unilever PLC, A Company Registered in England and Wales under Company no. 41424**
**London EC4Y 0DY**
**Greater London (GB)**

(72) Inventors:
- **Bird, Jayne Michelle,**
**Wirral,$Merseyside CH63 3JW, (GB)**
- **Batchelor, Stephen Norman,**
**Wirral,$Merseyside CH63 3JW, (GB)**

(74) Representative: **Avila, David Victor**
**Unilever PLC**
**Unilever Patent Group**
**Colworth House**
**Sharnbrook**
**Bedford**
**Bedfordshire MK44 1LQ (GB)**

## (54) Surfactant ratio in laundry detergents comprising a dye

(57) The present invention provides a shading granular laundry detergent formulation comprising
(i) from 0.0001 to 0.01 wt.% of a blue or violet cationic dye; and
(ii) from 2 to 70 wt.% of surfactant selected from anionic and non-ionic surfactants, wherein the weight ratio of non-ionic : anionic surfactant is from 5 : 100 to 30 : 100.



Printed by Jouve, 75001 PARIS (FR)

## Description

### FIELD OF INVENTION

The present invention concerns laundry shading dye compositions.

### BACKGROUND OF INVENTION

Anionic surfactants are widely used in main wash detergents. To increase the cleaning ability of formulations non-ionic surfactants are added.

WO2005/003274 (Unilever), WO2006/004870 (Procter and Gamble) discloses the use of blue or violet cationic dyes in detergent formulations. The cationic dyes deposit to fabrics and enhance garment whiteness.

### SUMMARY OF THE INVENTION

Cationic dyes deposit to fabrics in one wash than after a number of repeat washes the level of the dye on the cloth reaches an asymptotic value, becoming constant. It is most desirable for this to occur at the earliest repeated wash number, so that greatest benefit may be achieved in the first wash.

The presence of non-ionic surfactant interferes with the deposition and build up of cationic dyes from anionic surfactant wash formulations.

The present invention provides granular shading formulation that provides optimal shading dye build up profile with formulations containing non-ionic surfactants.

In one aspect the present invention provides a granular laundry detergent formulation comprising:

(i) from 0.0001 to 0.01 wt% of a blue or violet cationic dye; and,
(ii) from 2 to 70 wt% of surfactant selected from anionic and non-ionic surfactants, wherein the weight ratio of non-ionic: anionic surfactant is from 5:100 to 30:100, preferably 10:100 to 25:100.

### DETAILED DESCRIPTION OF THE INVENTION

### CATIONIC DYES

The cationic dye is blue or violet. Preferably the blue or violet cationic dye gives a blue or violet colour to the cloth with a hue angle of 250 to 345, more preferably 265 to 330, most preferably 270 to 300. The cloth used to determine the hue angle is white bleached non-mercerised woven cotton sheeting.

The cationic dye has a molar extinction coefficient at a wavelength in the range 400 to 700nm of at least 1000 $mol^{-1}\ L\ cm^{-1}$, preferably greater than 6000 $mol^{-1}\ L\ cm^{-1}$.

The cationic (basic) dye is positively charged. The cationic dye does not contain a sulphonate nor carboxylic acid group. The chromophore is preferably selected from: azine; Triphenylmethane; azo; methine; naptholactam; and, anthraquinone. Preferably the cationic dye is selected from the following classes of dye:

(1) a cationic azine dye of the following form:

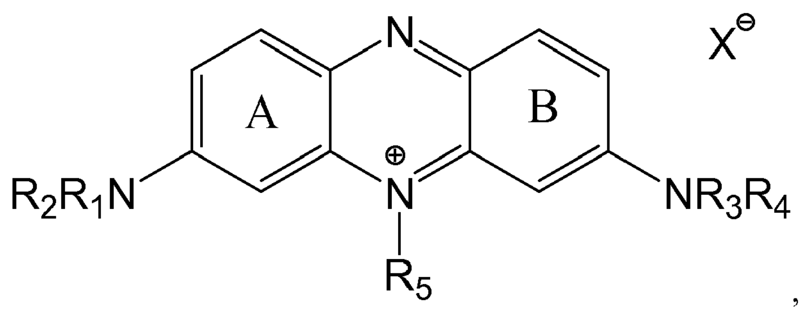
,

wherein X- is a negative anion;
no more than three of the groups R1, $R_2$, $R_3$ and $R_4$ are H and are independently selected from: a polyether chain, benzyl, phenyl, amine substituted benzyl, amine substituted phenyl, $COCH_3$, H, a linear or branched alkyl chains;

a linear or branched alkyl chains which is substituted by one or more groups selected from: ester groups; Cl; F; CN; OH; $CH_3O$-; $C_2H_5O$-; and, phenyl;

R5 is selected from the group consisting of: a branched or linear C1 to C10 alkyl; a branched or linear C1 to C10 alkyl group substituted by a phenyl group; and, an aromatic group; one or more of rings A or B may be further substituted to form a naphthyl ring; and,

the dye is not covalently bound to a negatively charged substituent.

(2) a cationic thiazolium mono-azo dye,

(3) a cationic isothiazolium mono-azo dye

(4) a cationic naptholactams dye

(5) a cationic pyridine/pyridazine mono-azo dye

X- is a counter ion. X- is not essential aspect of the invention and may be varied widely. An- may be an anion such as $RCOO^-$, $BPh_4^-$, $C1O_4^-$, $BF_4^-$, $PF_6^-$, $RSO_3^-$, $RSO_4^-$, $SO_4^{2-}$ , $NO_3^-$ , $F^-$, $C1^-$, $Br^-$, or $I^-$, with R being hydrogen, optionally substituted alkyl or optionally substituted aryl. Preferably X- is selected from: $CH_3SO_3^-$ , $CH_3CO_2^-$ , $BF_4^-$, $C1^-$, $F^-$ $Br^-$, and $I^-$.

SURFACTANT

The composition comprises between 2 to 70 wt% of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

1) Anionic Surfactants

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. Most preferred anionic surfactants are sodium lauryl ether sulfate (SLES), particularly preferred with 1 to 3 ethoxy groups, sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides. The chains of the surfactants may be branched or linear.

Soaps are also preferred. The fatty acid soap used preferably contains from about 16 to about 22 carbon atoms, preferably in a straight chain configuration. The anionic contribution from soap is preferably from 0 to 30 wt% of the total anionic.

Preferably, at least 50 wt % of the anionic surfactant are selected from: sodium $C_{11}$ to $C_{15}$ alkyl benzene sulphonates; and, sodium $C_{12}$ to $C_{18}$ alkyl sulphates. Even more preferably, the anionic surfactant is sodium $C_{11}$ to $C_{15}$ alkyl benzene sulphonates.

2) Non-Ionic Surfactants

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Preferred nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched alcohols with ethylene oxide, generally 5 to 40 EO. Alkyl ethoxylates are particularly preferred.

BUILDER

The formulation may contain a builder.

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate. Preferably, the laundry treatment composition comprises sodium carbonate in the range from 5 to 50 wt%, most preferably 10 to 35 wt%. In the method, when used with granular laundry treatment composition, the aqueous wash solution preferably comprises 0.1 to 4 g/L of sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g.

The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate.

ENZYMES

The composition may comprise one or more enzymes, which provide cleaning performance, fabric care and/or sanitation benefits.

Especially contemplated enzymes include proteases, alpha-amylases, cellulases, lipases, peroxidases/oxidases, pectases, lyases, and mannanases, or mixtures thereof.

Most suitable lipases are disclosed in WO 2007/087257, WO2009/107091 and WO2009/111258

FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

Experimental

Example 1

Woven cotton fabric was washed in an aqueous wash solution (demineralised water) containing 1g/L surfactant, 1g/L sodium carbonate and 1g/L sodium chloride at a liquor to cloth ratio of 30:1. The surfactant system was chosen from various ratio's of Linear Alkyl benzene sulfonate (LAS): NI(7EO) which is R-$(OCH_2CH_2)_n$OH, where R is an alkyl chain of C12 to C15, and n is 7. To the wash solution a cationic shading dye was added such that the wash solution contained 0.12 ppm of the dye. The cationic shading dye used was:

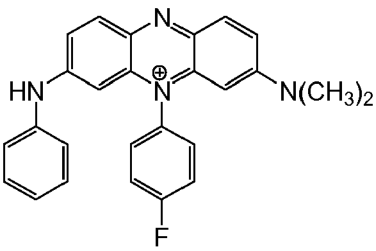

After 30 minutes of agitation the cloths were removed rinsed and dried. Washes were then repeated until 4 wash cycles had been accomplished. After the 1st, 2nd and 4th wash the reflectance spectra of the cloth were measured on a reflectometer and the colour expressed as CIE L* a* b* values.

The increased in whiteness of the cloth was expressed as the change in blue:

$$\Delta b = b_{control} - b_{dye}.$$

The results are given in the table below

| LAS:NI | Δb | | |
|---|---|---|---|
| | 1st | 2nd | 4th |
| 100:0 | 9.4 | 11.7 | 12.3 |
| 75:25 | 10.1 | 12.0 | 12.5 |
| 50:50 | 10.0 | 13.3 | 15.4 |
| 25:75 | 10.9 | 14.3 | 18.0 |
| 0:100 | 11.2 | 16.2 | 21.8 |

The dye deposits from all surfactant systems, and after a few washes the deposition approaches an asymptotic value. This value is approached more rapidly for surfactant systems were the amount of LAS is higher.

Example 2

The experiment of example 1 show that surfactant systems that give lower deposition in the first wash have preferred build up profiles over multiple washes.

Woven cotton fabric, microfiber polyester and knitted nylon-elastane (80:20) were washed in an aqueous wash

solution (demineralised water) containing 1g/L surfactant, at a liquor to cloth ratio of 30:1. The surfactant system was chosen from various ratio's of Linear Alkyl benzene sulfonate (LAS) : NI (7EO) which is R- $(OCH_2CH_2)_n OH$, where R is an alkyl chain of C12 to C15, and n is 7. To the wash solution the cationic shading dye was added:

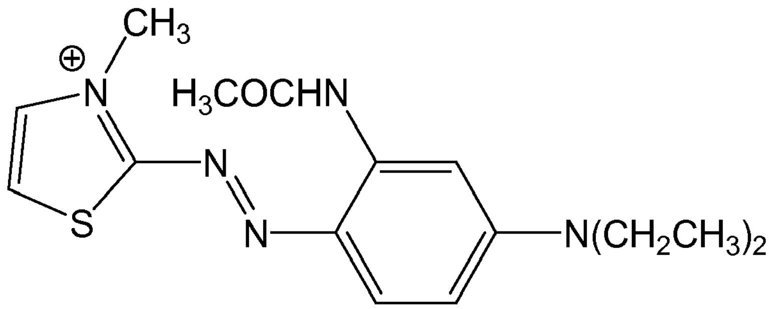

After 30 minutes of agitation the cloths were removed rinsed and dried. Washes were then repeated until 4 wash cycles had been accomplished. After the 1st wash the reflectance spectra of the cloth were measured on a reflectometer and the colour expressed as CIE L* a* b* values.

The increased in whiteness of the cloth was expressed as the change in blue:

$$\Delta b = b_{control} - b_{dye}.$$

The results are given in the table below

| NI:LAS | Δb |
|---|---|
| | cotton |
| 100:0 | 15.8 |
| 90:10 | 14.7 |
| 80:20 | 13.8 |
| 70:30 | 13.8 |
| 60:40 | 12.6 |
| 50:50 | 12.4 |
| 40:60 | 12.5 |
| 30:70 | 11.5 |
| **20:80** | **10.6** |
| **10:90** | **10.6** |
| 0:100 | 9.9 |

Example 3

The following formulations are within the scope of the invention:

| Ingredient | Formulation 1 | Formulation 2 | Formulation 3 |
|---|---|---|---|
| LAS | 5 | 20 | 22 |
| PAS | 7 | 10 | 0 |
| NI (7EO) | 2 | 7 | 2 |
| Sodium carbonate | 14 | 42 | 35 |

(continued)

| Ingredient | Formulation 1 | Formulation 2 | Formulation 3 |
|---|---|---|---|
| Sodium silicate | 2 | 0 | 5 |
| Sodium polyacrylate | 1 | 2 | 1 |
| zeolite | 30 | 0 | 7 |
| Sodium sulphate | 30 | 10 | 15 |
| Protease | 0.01 | 0.005 | 0.005 |
| Lipase | 0.01 | 0.005 | 0.005 |
| amylase | 0.003 | 0.004 | 0.002 |
| Fluorescer | 0.1 | 0.2 | 0.5 |
| Cationic shading dye | 0.0001 | 0.0005 | 0.001 |

PAS is primary alkyl sulphate (linear and branched) Remainder minors and water

Formulations were made using Lipex as the lipase, Savinase and Polarzyme as the protease, and Stainzyme as the amylase. Enzyme levels are given as percent pure enzyme.

Formulations were made with the following shading dyes:

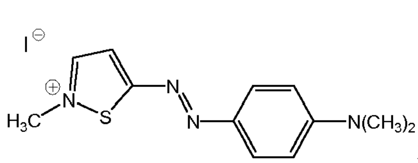
;
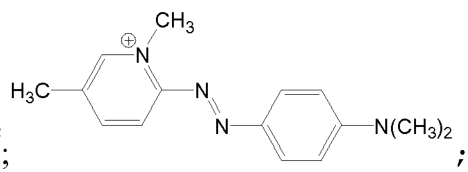
;

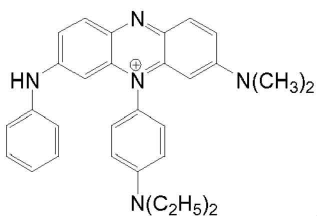
;
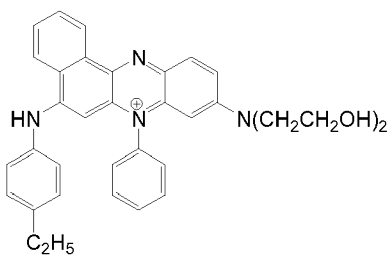

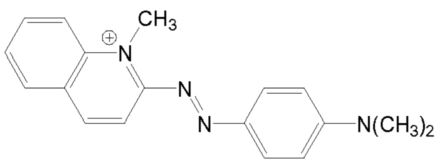
and
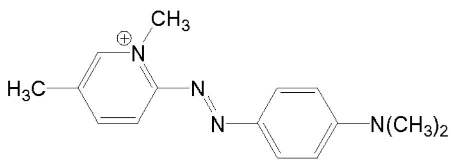

**Claims**

**1.** A granular laundry detergent formulation comprising:

(i) from 0.0001 to 0.01 wt% of a blue or violet cationic dye; and,

(ii) from 2 to 70 wt% of surfactant selected from anionic and non-ionic surfactants, wherein the weight ratio of

non-ionic:anionic surfactant is from 5:100 to 30:100.

2. A laundry detergent formulation according to claim 1, wherein the weight ratio of non-ionic:anionic surfactant is from 10:100 to 25:100.

3. A laundry detergent formulation as defined in any one of the preceding claims, wherein the anionic surfactants are selected from: sodium $C_{11}$ to $C_{15}$ alkyl benzene sulphonates; sodium $C_{12}$ to $C_{18}$ alkyl sulphates; and, soap.

4. A laundry detergent formulation as defined in any one of the preceding claims, wherein at least 80 wt % of the anionic surfactant are selected from: sodium $C_{11}$ to $C_{15}$ alkyl benzene sulphonates; and, sodium $C_{12}$ to $C_{18}$ alkyl sulphates.

5. A laundry detergent formulation as defined in any one of the preceding claims, wherein the non-ionic surfactant is an alkyl ethoxylate.

6. A laundry detergent formulation as defined in any one of the preceding claims, wherein the dye selected from:

   cationic azine; cationic triphenylmethane; cationic azo;
   cationic methine; cationic naptholactam; and, cationic anthraquinone dyes.

7. A laundry detergent formulation as defined in claim 7, wherein the wherein the dye selected from: a cationic thiazolium mono-azo dye; a cationic isothiazolium mono-azo dye; a cationic naptholactams dye; and, a cationic pyridine/ pyridazine mono-azo dye.

8. A laundry detergent formulation as defined in claim 7, wherein the cationic azine dye of the following form:

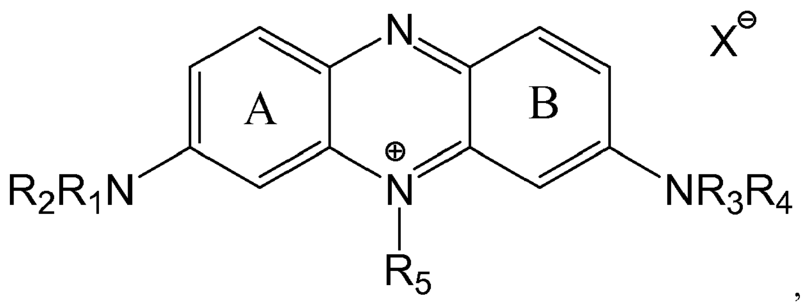

,

wherein X- is a negative anion;
no more than three of the groups R1, $R_2$, $R_3$ and $R_4$ are H and are independently selected from: a polyether chain, benzyl, phenyl, amine substituted benzyl, amine substituted phenyl, $COCH_3$, H, a linear or branched alkyl chains; a linear or branched alkyl chains which is substituted by one or more groups selected from: ester groups; Cl; F; CN; OH; $CH_3O$-; $C_2H_5O$-; and, phenyl;
R5 is selected from the group consisting of: a branched or linear C1 to C10 alkyl; a branched or linear C1 to C10 alkyl group substituted by a phenyl group; and, an aromatic group; one or more of rings A or B may be further substituted to form a naphthyl ring; and, the dye is not covalently bound to a negatively charged substituent.

Europäisches Patentamt
European Patent Office
Office européen des brevets

# EUROPEAN SEARCH REPORT

Application Number
EP 10 15 3406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/141172 A1 (UNILEVER PLC [GB]; UNILEVER NV [NL]; UNILEVER HINDUSTAN [IN]) 26 November 2009 (2009-11-26)<br>* page 2, line 7 - page 3, line 14 *<br>* page 4, lines 4-5 *<br>* page 9, line 4 - page 10, line 30 *<br>* page 22; table *<br>* claims *<br>----- | 1-8 | INV.<br>C11D1/83<br>C11D3/40<br>C11D10/04<br><br>ADD.<br>C11D1/14<br>C11D1/22<br>C11D1/72 |
| X,D | WO 2006/004870 A1 (PROCTER & GAMBLE [US]) 12 January 2006 (2006-01-12)<br>* page 1, paragraph 1 *<br>* page 1, last paragraph - page 2, paragraph 1 *<br>* page 2, paragraph 3 *<br>* example 2 *<br>* claims 1-6, 8 *<br>----- | 1-8 | |
| X | US 2006/111264 A1 (SMETS JOHAN [BE] ET AL) 25 May 2006 (2006-05-25)<br>* paragraphs [0003], [0017], [0020] *<br>* examples 8, 13 *<br>----- | 1-8 | TECHNICAL FIELDS SEARCHED (IPC)<br>C11D |
| X | WO 2007/084729 A2 (PROCTER & GAMBLE [US]) 26 July 2007 (2007-07-26)<br>* page 1, last paragraph *<br>* page 9, paragraph 2 - page 10, paragraph 1 *<br>* example 2c *<br>* claims 1, 8, 9 *<br>----- | 1-8 | |
| A,D | WO 2005/003274 A1 (UNILEVER PLC [GB]; UNILEVER NV [NL]; LEVER HINDUSTAN LTD [IN]) 13 January 2005 (2005-01-13)<br>* page 2, line 22 - page 3, line 20 *<br>* claims *<br>----- | 1-8 | |

The present search report has been drawn up for all claims

| Place of search | Date of completion of the search | Examiner |
|---|---|---|
| The Hague | 8 July 2010 | Bertran Nadal, Josep |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 10 15 3406

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2010

| Patent document cited in search report | Publication date | Patent family member(s) | Publication date |
|---|---|---|---|
| WO 2009141172 A1 | 26-11-2009 | WO 2009141173 A1 | 26-11-2009 |
| WO 2006004870 A1 | 12-01-2006 | AR 049537 A1 | 09-08-2006 |
| | | AT 443125 T | 15-10-2009 |
| | | BR PI0512805 A | 08-04-2008 |
| | | CA 2569558 A1 | 12-01-2006 |
| | | CN 1969034 A | 23-05-2007 |
| | | EP 1761624 A1 | 14-03-2007 |
| | | JP 2008502793 T | 31-01-2008 |
| US 2006111264 A1 | 25-05-2006 | US 2010132134 A1 | 03-06-2010 |
| WO 2007084729 A2 | 26-07-2007 | CA 2633794 A1 | 26-07-2007 |
| | | CA 2636869 A1 | 02-08-2007 |
| | | CN 101370924 A | 18-02-2009 |
| | | CN 101370925 A | 18-02-2009 |
| | | EP 1976968 A2 | 08-10-2008 |
| | | EP 1991652 A1 | 19-11-2008 |
| | | JP 2009522440 T | 11-06-2009 |
| | | JP 2009523903 T | 25-06-2009 |
| | | WO 2007087252 A1 | 02-08-2007 |
| | | ZA 200805719 A | 25-11-2009 |
| | | ZA 200806177 A | 29-07-2009 |
| WO 2005003274 A1 | 13-01-2005 | AR 066285 A2 | 12-08-2009 |
| | | AT 402248 T | 15-08-2008 |
| | | AU 2004254179 A1 | 13-01-2005 |
| | | BR PI0411547 A | 01-08-2006 |
| | | CA 2528127 A1 | 13-01-2005 |
| | | EP 1633842 A1 | 15-03-2006 |
| | | EP 2145947 A2 | 20-01-2010 |
| | | ES 2310733 T3 | 16-01-2009 |
| | | US 2009264335 A1 | 22-10-2009 |
| | | US 2006287211 A1 | 21-12-2006 |
| | | ZA 200509654 A | 28-03-2007 |
| | | ZA 200509714 A | 25-07-2007 |
| | | ZA 200510034 A | 28-03-2007 |
| | | ZA 200702420 A | 25-09-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005003274 A
- WO 2006004870 A
- EP 328177 A
- EP 070074 A
- EP 0384070 A
- WO 2007087257 A
- WO 2009107091 A
- WO 2009111258 A


### Non-patent literature cited in the description


- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- CTFA. International Buyers Guide. CFTA Publications and OPD, 1992
- Chemicals Buyers Directory 80th Annual Edition. Schnell Publishing Co, 1993
- **POUCHER.** *Journal of the Society of Cosmetic Chemists,* 1955, vol. 6 (2), 80